# EUROPEAN PATENT SPECIFICATION

(11) **EP 3 677 012 B1**
(45) Date of publication and mention of the grant of the patent: **11.08.2021**
(21) Application number: 18762254.3
(22) Date of filing: 27.08.2018
(51) Int. Cl.: H04L 29/08, B31F 1/07

(54) **INTELLIGENT HUB**
INTELLIGENTER HUB
CONCENTRATEUR INTELLIGENT

(30) Priority: 29.08.2017 EP 17306107
(43) Date of publication of application: 08.07.2020
(73) Proprietor: Terabee S.A.S., 01630 Saint-Genis Pouilly (FR)
(72) Inventor: KOVERMANN, Jan W., 74520 Vulbens (FR); RUFFO, Massimiliano, 1224 Chêne-Bougerie (CH)
(74) Representative: Weihs, Bruno Konrad
(86) International application number: PCT/EP2018/072978
(87) International publication number: WO 2019/042917

(56) References cited:
- US-A1- 2010 141 377
- US-A1- 2015 032 412
- FATEMEH FAZEL ET AL: "Random Access Compressed Sensing for Energy-Efficient Underwater Sensor Networks", IEEE JOURNAL ON SELECTED AREAS IN COMMUNICATIONS, IEEE SERVICE CENTER, PISCATAWAY, US, vol. 29, no. 8, 1 September 2011 (2011-09-01), pages 1660-1670, XP011380936, ISSN: 0733-8716, DOI: 10.1109/JSAC.2011.110915

## Description

### Technical field

The invention relates to the field of smart handling of measurement data provided from a plurality of sensors, for example distance measurement data.

### Background

It is common to have a plurality of sensors perform measurements to determine a set of parameters with a specific purpose.

Prior art publication "Random Access Compressed Sensing for Energy-Efficient Underwater Sensor Networks, Fatemeh Fazel et Al, IEEE journal on selected areas in communications, IEEE service center, Piscataway, US, vol. 29, no. 8, 1 September 2011 (2011-09-01), pages 1660-1670, ISSN: 0722-8716" relates to a networking scheme that combines the concepts of random channel access and compressed sensing to achieve energy and bandwidth efficiency. This scheme is mainly suitable for large networks, deployed for long-term monitoring of slowly varying phenomena.

In another example, when building a partly autonomously moving robot it is necessary to provide measurements about the surroundings of the robot and evaluate whether the robot may move in a direction depending on the results and processing of the measurements. These operations are classically performed with laser scanners, in 2-Dimensions or in 3-Dimensions, whereby sequentially gathered measurement data is stored in a system buffer, with the problem of filling the system buffer with lots of data, at least a part of which is not necessarily useful for the evaluation.

An alternative manner of performing measurements is to use the plurality of sensors working in parallel. The measurements need to be effected in real time, preferably for the entire surroundings of the robot. The plurality of detectors may be mounted on the robot in such a manner that the entire surroundings are covered by a combined viewing field of all of the plurality of detectors.

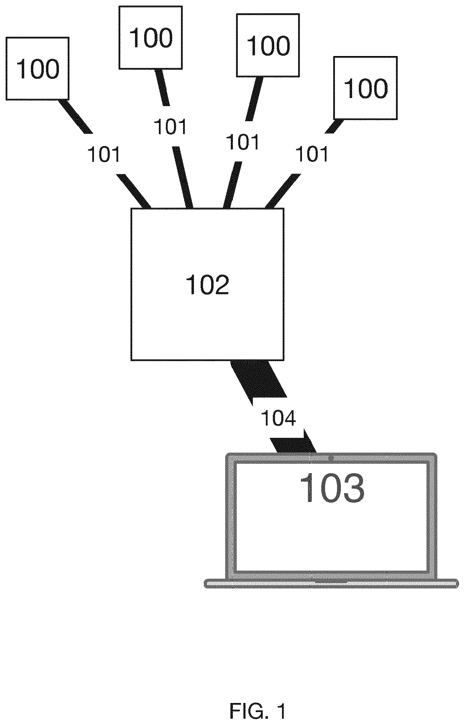

Figure 1 schematically illustrates a solution to handle measurements from the plurality of detectors 100. Each of the detectors 100 constantly makes measurements and provides a flow of measurement data to a hub 102 by means of detector data connections 101. The hub eventually conveys the measurement data from all the detectors 100 to a computer 103 by means of a data connection 104. The width of the line representing data connection 104 is deliberately wider than that of each detector data connection 101 to show that a bandwidth required to transmit all measurement data to the computer 103 is proportional to the number of detectors 101.

The measurement data at the input of the hub 102 is typically multiplexed to obtain the stream of measurement data output of data connection 104.

The measurement data input to the computer 103 over data connection 104 is processed as appropriate such to demultiplex the stream of measurement data and obtain a real-time representation of the robot's surroundings, to make any movement decisions as required, and to output the movement to drive the robot (not shown in figure 1).

It will be understood that the amount of measurement data to be acquired, multiplexed, transmitted and processed is roughly proportional to the number of detectors, but also to the actual detector technology used. For example, if a detector 100 periodically measures a 2-dimensional array of values, the amount of data is proportional to the surface of the array, more exactly to the number of individual measurement points on the surface, and to the periodicity of measurements. The overhead handling capacity for the amount of measurements and the processing power required to process all measurement data may exceed available capacities of the robot, and instead of having the computer 103 and its own power supply in the robot, this will typically be implemented outside of the robot, whereby a high capacity data link may be required to implement the data connection 104.

Departing from this prior art configuration, there is a need for a solution that could limit the need and dimensioning of the overhead handling capacity for the amount of measurement and the processing power required to process all measurement data.

### Summary of the invention

The invention provides an intelligent hub device, comprising a plurality of detector connectors configured to receive measurement signals from detectors intended to be connected thereto, and to output control signals to the detectors, at least one of the intended detectors comprising an array of individually addressable and readable sensors, controlling means configured to output for each of the plurality of detectors a corresponding control signal to induce each of the detectors to measure and output resulting measurement signals, including an array control signal to the array of individually addressable and readable sensors intended to address only a subset of these sensors such that these become the only sensors of the array to output array measurement signal to the hub, reading means configured to receive the output measurement signal and the array measurement signal, processing means configured to at least operate the controlling means, and communication means configured to handle data communication of the processing means to an outside of the hub.

In a preferred embodiment, the processing means is further configured to receive an output from the reading means, and to process the output from the reading means.

In a further preferred embodiment, at least one of the plurality of detectors is integral part of the hub.

In a further preferred embodiment, the controlling means are further configured to dynamically reconfigure the subset of the array of individually addressable and readable sensors, whereby the array control signal is adapted correspondingly to address only the reconfigured subset of the array.

In a further preferred embodiment, the array of individually addressable and readable sensors is a multi-pixel time-of-flight detector covering a field of view, and enabled to detect and range objects up to a determined distance.

In a further preferred embodiment, at least one of the detectors intended to be connected to a detector connector is a multi-pixel 3D camera.

In a further preferred embodiment, at least one of the detectors intended to be connected to a detector connector is one of the detector list comprising hyper/multispectral, thermal, UV, THz cameras.

In a further preferred embodiment, at least one of the detectors is an Inertia Measurement Unit, which enables to determine a reference to a point cloud in case the intelligent hub is moving, or to give a vibration signal in case the intelligent hub is static.

In a further preferred embodiment, at least one of the detectors is a radiofrequency receiver, configure to perform a radiofrequency triangulation, thereby enabling the intelligent hub as a tag which also calculates its absolute positioning by dialoguing with fixed radiofrequency anchors in known positions.

In a further preferred embodiment, the detectors intended to be connected to the plurality of detector connectors are configured relative to the hub such to form a star topology with the hub in a centre of the star, such that each of the detectors has through its corresponding detector connector a direct connection to the hub.

### Brief description of the drawings

The invention will be better understood in view of the description of preferred embodiments, and in reference to the drawings, wherein
figure 1 schematically illustrates a solution to handle measurements from a plurality of detectors according to prior art;
figure 2 schematically illustrates an intelligent hub according to an example embodiment of the invention;
figure 3 schematically illustrates a more detailed structure of the intelligent hub from figure 2, according to the invention;
figure 4 schematically illustrates an intelligent hub with detectors connected to it according to an example embodiment of the invention;
figure 5 schematically illustrates a further example of intelligent hub with detector connected to it according to a further example embodiment of the invention; and
figure 6 is a flowchart illustrating a re-configuration process according to a preferred embodiment of the intelligent hub of the invention.

### Detailed description of preferred embodiments of the invention

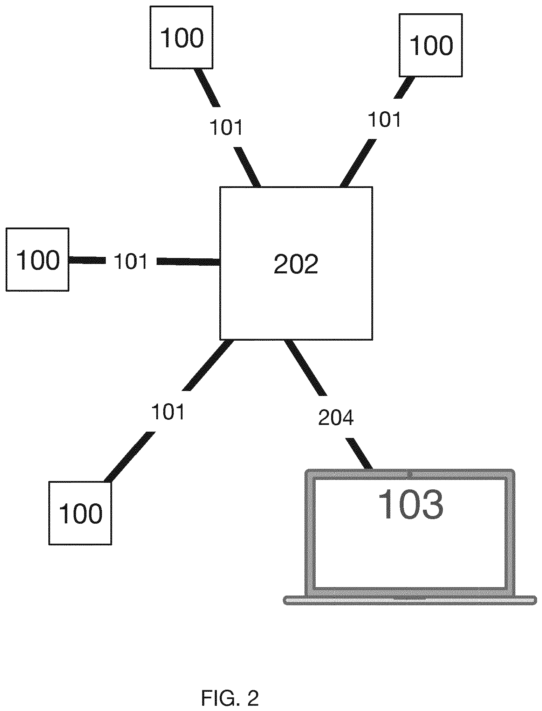

Figure 2 schematically illustrates an example of an intelligent hub 202 with detectors 100 connected to it by means of detector data connections 101. The intelligent hub 202 eventually conveys at least a part of the measurement data from all the detectors 100 to the computer 103 by means of a data connection 204. As opposed to the prior art example shown in figure 1, the width of the line representing data connection 204 is not wider than that of each detector data connection 101 to show that a bandwidth required to transmit the measurement data to the computer 103 is not necessarily proportional to the number of detectors 100. As will be explained herein under, the amount of measurement data to transmit of data connection 204 is modulated by the use of the intelligent hub 202.

While figure 2 only shows the computer 103 at one end of the data connection 204, it is understood that there may also be one of more systems to implement any of a machine control, a machine safety, or alarm for a system that comprises the intelligent hub 202.

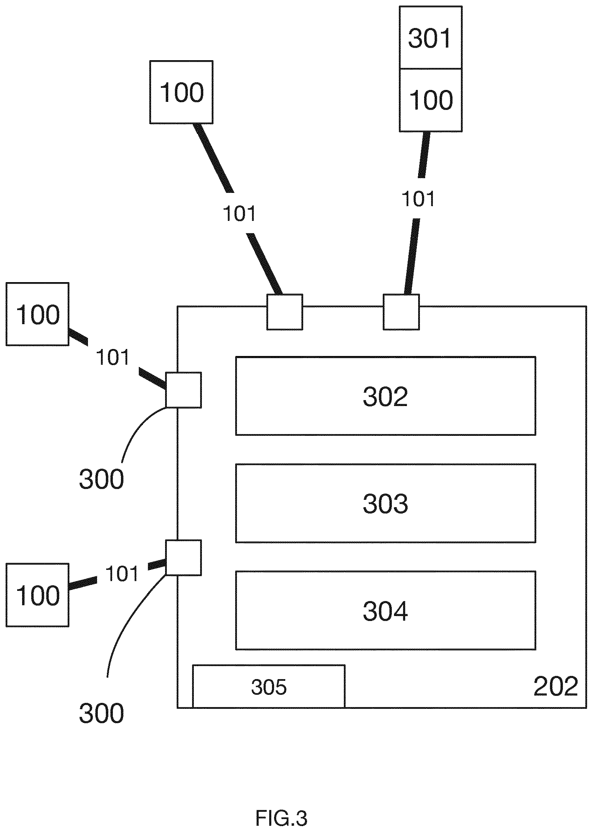

Figure 3 shows a more detailed view of the intelligent hub 202 which comprises a plurality of detector connectors 300, to each of which is connected one of the detectors 100 through its detector data connection 101.

The type of detector connector 300 may depend on the type of the detector intended to be connected to it. Hence there may even be a number of different types of detector connectors 300 on one single intelligent hub, in case this is needed to accommodate a corresponding number of different types of detectors 100. For example, the detector connector may be any one of a soldered connection on a Printed Circuit Board, a plugged cable interface, a Serial Peripheral Interface.

At least one of the detectors 100 comprises an array 301 of individually addressable and readable sensors-sensors not shown in figure 3 for a better readability. While the sensors may be arranged in a grid type array, they could also be provided in a different layout as appropriate and desired for the end use.

The intelligent hub further comprises controlling means 302, reading means 303, processing means 304, and communication means 305.

The controlling means 302 is configured to output for each of the plurality of detectors 100 a corresponding signal, for example through the detector data connection 101, to induce each of the detectors 100 to measure an observable (not shown in figure 3) and output resulting measurement signals through the detector data connection 101. The controlling means 302 is further configured to output an array control signal to the array 301 of individually addressable and readable sensors, which is intended to address only a subset of these sensors such that these become the only sensors of the array to output array measurement signal through the corresponding detector data connection 101 to the intelligent hub 202.

The reading means 303 is configured to receive the output measurement signal from the detectors 100 but also the array measurement signal from the detector 100 with the array 301 of individually addressable and readable sensors.

The processing means 304 is configured to operate the controlling means 302. In a preferred embodiment, the processing means 304 is further configured to receive an output from the reading means 303, and to process the output from the reading means.

The intelligent hub 202 further comprises a communication means 305 which is configured to handle data communication of the processing means 304 to an outside of the intelligent hub, e.g., by means of the data connection 204-not shown in figure 3.

In the schematic illustrations of figures 2 and 3, no actual physical shape or physical example configurations are illustrated.

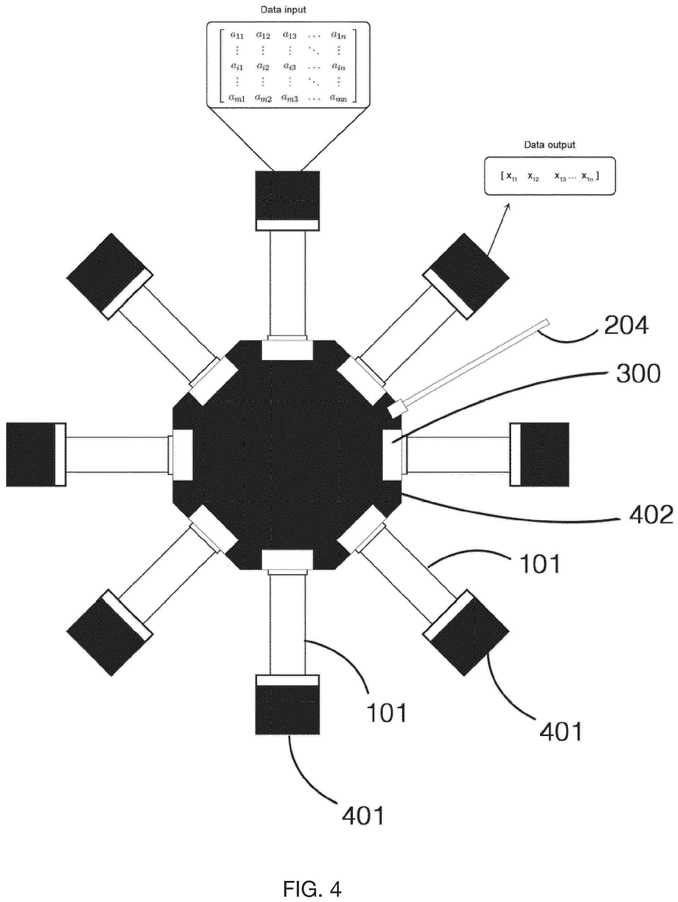

Turning now to figure 4, this illustrates an example of an intelligent hub 402, which comprises on a periphery of its housing a plurality of detector connectors 300, and for each detector connector 300 a detector 401 connected through its detector data connection 101. In this example, the detectors are multi-pixel 3D cameras as is schematically illustrated by an example array matrix representing measurement values [a₁₁ ... aₘₙ] that may be measured on sensors of the detector arranged in a 2-dimensional array of sensors-sensors not illustrated in figure 4. After processing in the intelligent hub 402, a reduced set of measurement values [x₁₁ ... x₁ₙ] is output by the communication means (not shown in figure 4) through the data connection 204. The set of measurement values is reduced in the sense that it is less voluminous than the number of measurement values potentially measurable by the array of sensors from the detector 401. One possible way of achieving the reduced set of measurement values is for the controlling means (not shown in figure 4) to output to only one detector 100 an array control signal which addresses only a subset of sensors from the detector, such that for example only sensors producing measurement values an to a₁ₙ are measured and output to the intelligent hub 402 through the detector data connection 101. This is instead of measuring values with the whole 2-dimensional array of sensors, and outputting a set of measurement values corresponding to each of the sensors. This saves time and data transmission bandwidth. The reading means (not shown in figure 4) reads the values an to a₁ₙ and outputs these to the processing means (not shown in figure 4), which processes these and sends the corresponding processed values x₁₁ to x₁ₙ to the communication means.

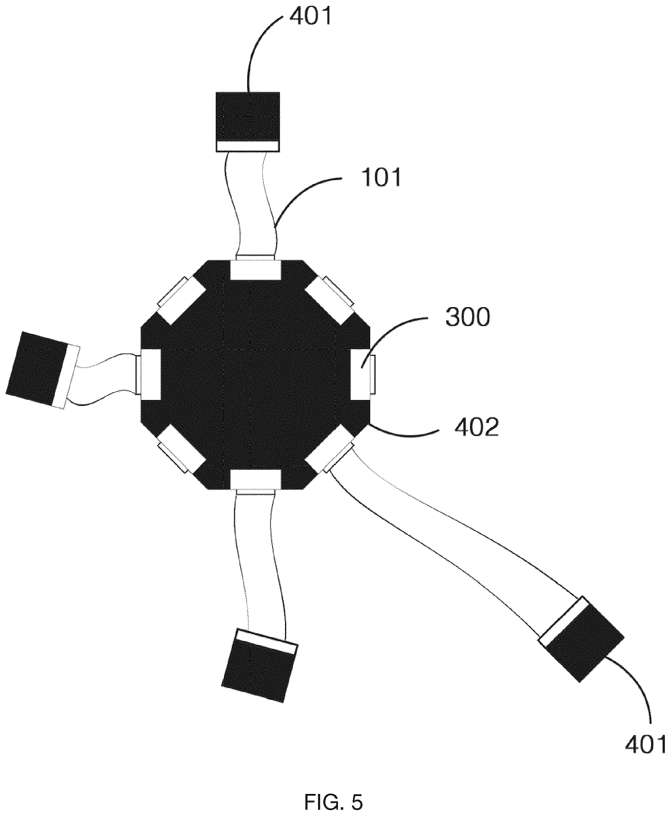

Figure 5 shows a further example of the intelligent hub 402, with the detector connectors 300. As opposed to the embodiment shown in figure 4, here only 4 detectors 401 are connected to the intelligent hub in total. The detector data connections 101 which are schematically illustrated in various physical shapes and lengths show that the detectors 401 needn't be positioned at equal distances from the intelligent hub 402.

In all examples previously discussed, at least one of the detectors may be a multi-pixel Time-of flight sensor covering a field of view and configured to detect and range object up to a given determined distance.

More generally, at least one of the detectors may be of a technology that enables acquiring multi-pixel or multi-dimensional data.

In a further example, at least one of the detectors may be an Inertia Measurement Unit. The measurement(s) from the IMU may be merged with measurement of other detectors to determine a movement of the system incorporating the detectors. The measurement from the IMU may give a reference to the point cloud in case the intelligent hub is moving, or it might give a vibration signal in case the intelligent hub is static.

In a further example, one of the detectors is a radiofrequency receiver, configured to perform radiofrequency triangulation. Date from from the radiofrequency triangulation may be merged with measurement from other detector, i.e., the intelligent hub works as a tag, which also calculates its absolute positioning by dialoguing with fixed anchors in known positions. The configuration of the present example provides a powerful robot navigation kit. In a further use case wherein the intelligent hub is fixed on a static case, the radiofrequency triangulation may be used to add redundant data about the approach of a tagged object.

Preferably, the intelligent hub according to the invention is configured to connect the detectors, this being one or a plurality of detectors, in a star topology, whereby the intelligent hub is in the centre of the star. Another name for *star topology* is parallel topology.

In a further preferred alternative embodiment, the intelligent hub according to the invention is configured to connect to the one or the plurality of detectors by means of a bus. The bus may for example be of a sequential type technology.

The intelligent hub according to the invention may be configured to control detectors and process measurements therefrom to detect and measure relative movements.

The intelligent hub according to the invention may be part of a static system, i.e., a system not explicitly made to move around.

In a further preferred embodiment, the intelligent hub according to the invention may be part of a mobile system, i.e., an embarked configuration integrated in such mobile system.

A scenario in which controlling means, reading means and processing means conduct a selection of detector(s) to be involved in measurement, i.e., even specific arrays of sensors inside the selected detector(s) may be set-up and adapted at any time before and during use of the intelligent hub. In case the situation which is to be measured covers the whole space around the system, it may not be necessary to restrict the selection of detectors to a subset of detectors and arrays of sensors. However, the situation which is to be measured or detected may be predefined for a specific spatial environment of the system; this allows to use only a limited amount of sensors in a configuration adapted to the situation, free shape in directions and axis. For example, if it is known in advance that the movement around the system may happen only in one determined direction, it is then possible to focus the one or the plurality of detectors, and even specific arrays of sensors towards detecting the movement in the determined direction. As a result, it is avoided to cover the whole surrounding of the system all the time.

As already mentioned, with the intelligent hub according to the invention, the controlling means enable to configure connected detectors that comprise arrays of sensors, to only activate a measure from a subset of sensors in the array of sensors. Accordingly, each detector effectively acts to pre-filter the range data - point cloud- so that it only transmits the relevant data for the desired application back to the intelligent hub. The pre-filter, e.g., for a region or a distance of interest, a direction of movement, a shape, only pixels with a distance above or below a determined distance, a presence of objects closer than the determined distance, is configured by the intelligent hub. It means that the intelligent hub sends configuration data upstream to the sensors.

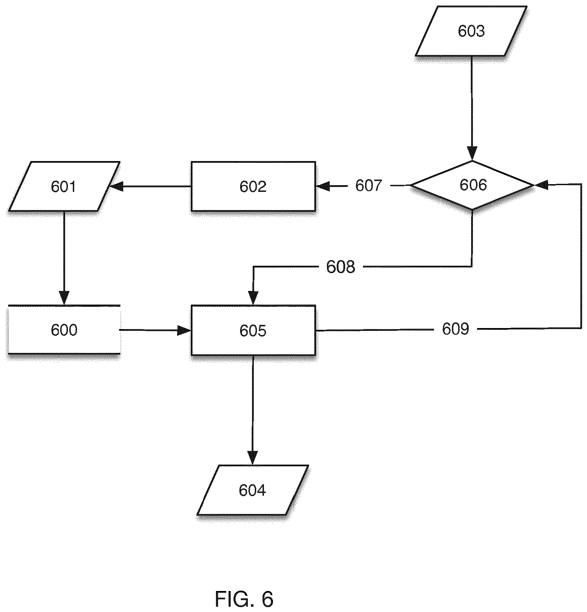

Referring to figure 6, preferably, the intelligent hub is configured to continuously analyze data 600 coming from the detector(s) 601 and to re-configure 602, if needed, the pre-filtering of the detectors so that always only the minimum necessary information 604 to fulfill a system's functionality is transmitted from the detectors to the intelligent hub. The continuous analysis is parameterized by requirements 603 of the system's functionality, and after each cycle of reading 605, the requirements 603 are checked 606, as illustrated by arrow 609. If the requirements 603 have changed, then branch 607 directs the re-configuring 602 of the detector(s) 601. If on the other hand the requirements 603 remain unchanged, and new cycle of reading 605 is performed as illustrated by branch 608.

As already mentioned the intelligent hub comprises processing means which may optionally be configured, among others, to process the output from the reading means. Hence, according to a further preferred embodiment of the invention, the intelligent hub may be configured to perform extra data filtering on the already prefiltered data from the detectors. in other word, the original data acquired is prefiltered first in the detectors, and then filtered in the intelligent hub. Preferably, the extra data filtering is executed by the processing means after data from all measuring detectors is joined.

In a further preferred embodiment, the intelligent hub's processing means is further configured with sufficient computation power that enable to run extra operations and algorithms, and to ensure that the output from the intelligent hub remains at a minimal level of information, fulfilling the need of the application in the leanest manner.

In a preferred example, the intelligent hub device may be used in a system configured for a supervision of a walkway, and, e.g., for person counting. The walkway has to be supervised and the people passing need to be counted. The people can pass at different speeds and can change direction, i.e., walk back, at any point on the supervised walkway. The detectors are arranged in a linear row alongside the walkway. Various situations may occur:
1. The walkway is empty, the system is in idle mode: each of the detectors is configured to only send data in case one of the sensors pixels of the detector detects an object closer than the transversal width of the walkway. No data is transmitted without a person on the walkway.
2. At least a person is entering the walkway: a first detector to detect will send a message to the intelligent hub, which will then reconfigure this detector to read out all sensor pixels for a couple of frames. This data is used to determine the number of persons on the walkway, provided one is not in the shadow of the other, and the direction and speed of movement. The detector is then put back in idle mode (1.) and a second detector in walking direction will act in a similar way as the first detector as soon as the person(s) on the walkway arrive(s) to it. In case the at least one person suddenly moves backwards, the first detector, which is now in idle mode, will detect a distance shorter than the walkway and inform the intelligent hub about this.

## Claims

1. An intelligent hub device, comprising
a plurality of detector connectors configured to receive measurement signals from detectors intended to be connected thereto, and to output control signals to the detectors, at least one of the intended detectors comprising an array of individually addressable and readable sensors,
controlling means configured to output for each of the plurality of detectors a corresponding control signal to induce each of the detectors to measure and output resulting measurement signals, including an array control signal to the array of individually addressable and readable sensors intended to address only a subset of these sensors such that these become the only sensors of the array to output array measurement signal to the hub,
reading means configured to receive the output measurement signal and the array measurement signal,
processing means configured to at least operate the controlling means, and com
munication means configured to handle data communication of the processing means to an outside of the hub.

2. The intelligent hub of claim 1, wherein the processing means is further configured to receive an output from the reading means, and to process the output from the reading means.

3. The intelligent hub device of any one of claims 1 and 2, wherein at least one of the plurality of detectors is integral part of the hub.

4. The intelligent hub device of any one of claims 1-3, wherein the controlling means are further configured to dynamically reconfigure the subset of the array of individually addressable and readable sensors, whereby the array control signal is adapted correspondingly to address only the reconfigured subset of the array.

5. The intelligent hub device according to any one of claims 1-4, wherein the array of individually addressable and readable sensors is a multi-pixel time-of-flight detector covering a field of view, and enabled to detect and range objects up to a determined distance.

6. The intelligent hub device according to any one of claims 1-4, wherein at least one of the detectors intended to be connected to a detector connector is a multi-pixel 3D camera.

7. The intelligent hub device according to any one of claims 1-4, wherein at least one of the detectors intended to be connected to a detector connector is one of the detector list comprising hyper/multispectral, thermal, UV, THz cameras.

8. The intelligent hub device according to any one of claims 1-4, wherein at least one of the detectors is an Inertia Measurement Unit, which enables to determine a reference to a point cloud in case the intelligent hub is moving, or to give a vibration signal in case the intelligent hub is static.

9. The intelligent hub device according to any one of claims 1-4, wherein at least one of the detectors is a radiofrequency receiver, configure to perform a radiofrequency triangulation, thereby enabling the intelligent hub as a tag which also calculates its absolute positioning by dialoguing with fixed radiofrequency anchors in known positions.

10. The intelligent hub device according to anyone of claims 1-9, wherein the detectors intended to be connected to the plurality of detector connectors are configured relative to the hub such to form a star topology with the hub in a centre of the star, such that each of the detectors has through its corresponding detector connector a direct connection to the hub.

## Patentansprüche

1. Intelligente Hub-Vorrichtung, umfassend:
eine Mehrzahl von Detektorverbindern, die zum Empfangen von Messsignalen von Detektoren, die dazu vorgesehen sind, damit verbunden zu werden, und zum Ausgeben von Steuersignalen an die Detektoren konfiguriert ist, wobei mindestens einer der vorgesehenen Detektoren eine Anordnung von individuell adressierbaren und lesbaren Sensoren umfasst,
Steuermittel, die zum Ausgeben eines entsprechenden Steuersignals für jeden der Mehrzahl von Detektoren konfiguriert sind, um jeden der Detektoren zum Messen und Ausgeben von resultierenden Messsignalen zu veranlassen, die ein Anordnungssteuersignal für die Anordnung von individuell adressierbaren und lesbaren Sensoren umfassen, das dazu vorgesehen ist, nur einen Teilsatz dieser Sensoren zu adressieren, derart dass diese die einzigen Sensoren der Anordnung zum Ausgeben eines Anordnungsmesssignals an den Hub werden,
Lesemittel, die zum Empfangen des ausgegebenen Messsignals und des Anordnungsmesssignals konfiguriert sind,
Verarbeitungsmittel, die wenigstens zum Betreiben der Steuermittel konfiguriert sind,
Kommunikationsmittel, die zum Handhaben von Datenkommunikation der Verarbeitungsmittel mit einer Außenseite des Hubs konfiguriert sind.

2. Intelligente Hub-Vorrichtung nach Anspruch 1, wobei das Verarbeitungsmittel ferner zum Empfangen einer Ausgabe von den Lesemitteln und zum Verarbeiten der Ausgabe von den Lesemitteln konfiguriert ist.

3. Intelligente Hub-Vorrichtung nach einem der Ansprüche 1 und 2, wobei mindestens einer der Mehrzahl von Detektoren ein integraler Bestandteil des Hubs ist.

4. Intelligente Hub-Vorrichtung nach einem der Ansprüche 1 bis 3, wobei die Steuermittel ferner zum dynamischen Neukonfigurieren des Teilsatzes der Anordnung von individuell adressierbaren und lesbaren Sensoren konfiguriert sind, wobei das Anordnungssteuersignal so ausgelegt ist, dass es dementsprechend nur den neukonfigurierten Teilsatz der Anordnung adressiert.

5. Intelligente Hub-Vorrichtung nach einem der Ansprüche 1 bis 4, wobei die Anordnung von individuell adressierbaren und lesbaren Sensoren ein Multipixel-Flugzeitdetektor ist, der ein Sichtfeld abdeckt, und Objekte bis zu einer vorbestimmten Distanz detektieren und klassifizieren kann.

6. Intelligente Hub-Vorrichtung nach einem der Ansprüche 1 bis 4, wobei mindestens einer der Detektoren, der dazu vorgesehen ist, mit einem Detektorverbinder verbunden zu werden, eine Multipixel-3D-Kamera ist.

7. Intelligente Hub-Vorrichtung nach einem der Ansprüche 1 bis 4, wobei mindestens einer der Detektoren, der dazu vorgesehen ist, mit einem Detektorverbinder verbunden zu werden, einer der Detektorenliste ist, die Hyper-/Multispektral-, Thermo-, UV-, THz-Kameras umfasst.

8. Intelligente Hub-Vorrichtung nach einem der Ansprüche 1 bis 4, wobei mindestens einer der Detektoren eine Trägheitsnavigationseinheit ist, die ein Bestimmen eines Bezugspunkts bezüglich einer Punktwolke, falls der intelligente Hub sich bewegt, oder ein Abgeben eines Schwingungssignals ermöglicht, falls der intelligente Hub statisch ist.

9. Intelligente Hub-Vorrichtung nach einem der Ansprüche 1 bis 4, wobei mindestens einer der Detektoren ein Radiofrequenzempfänger ist, der zum Durchführen einer Radiofrequenztriangulation konfiguriert ist, um dadurch den intelligenten Hub als Transponder zu ermöglichen, der außerdem seine absolute Positionsbestimmung durch Durchführen eines Dialogs mit festen Radiofrequenzankern in bekannten Positionen berechnet.

10. Intelligente Hub-Vorrichtung nach einem der Ansprüche 1 bis 9, wobei die Detektoren, die dazu vorgesehen sind, mit der Mehrzahl von Detektorverbindern verbunden zu werden, in Bezug auf den Hub derart konfiguriert sind, dass sie eine Sterntopologie mit dem Hub in einer Mitte des Sterns bilden, derart dass jeder der Detektoren durch seinen entsprechenden Detektorverbinder eine direkte Verbindung mit dem Hub aufweist.

## Revendications

1. Dispositif concentrateur intelligent, comprenant :
une pluralité de connecteurs de détecteurs configurés pour recevoir des signaux de mesure des détecteurs prévus pour être connectés à ceux-ci, et pour émettre des signaux de commande vers les détecteurs, au moins un des détecteurs prévus comprenant un ensemble de capteurs lisibles et adressables individuellement,
des moyens de commande configurés pour émettre pour chacun de la pluralité de détecteurs un signal de commande correspondant pour induire chacun des détecteurs à mesurer et émettre des signaux de mesure résultants, comprenant un signal de commande de matrice vers la matrice des capteurs lisibles et adressables individuellement prévus pour s'adresser seulement à un sous-ensemble de ces capteurs de sorte que ceux-ci deviennent les seuls capteurs de la matrice à émettre un signal de mesure de matrice vers le concentrateur,
des moyens de lecture configurés pour recevoir le signal de mesure d'émission et le signal de mesure de matrice,
des moyens de traitement configurés pour au moins utiliser les moyens de commande, et des moyens de communication configurés pour gérer une communication de données des moyens de traitement vers l'extérieur du concentrateur.

2. Concentrateur intelligent selon la revendication 1, dans lequel les moyens de traitement sont configurés en outre pour recevoir une émission des moyens de lecture, et pour traiter l'émission des moyens de lecture.

3. Dispositif concentrateur intelligent selon l'une quelconque des revendications 1 et 2, dans lequel au moins un de la pluralité des détecteurs est une partie intégrale du concentrateur.

4. Dispositif concentrateur intelligent selon l'une quelconque des revendications 1 à 3, dans lequel les moyens de commande sont configurés en outre pour reconfigurer dynamiquement le sous-ensemble de la matrice de capteurs lisibles et adressables individuellement, où le signal de commande de matrice est adapté de manière correspondante pour s'adresser seulement au sous-ensemble reconfiguré de la matrice.

5. Dispositif concentrateur intelligent selon l'une quelconque des revendications 1 à 4, dans lequel la matrice des capteurs lisibles et adressables individuellement est un détecteur de temps de vol multi-pixels couvrant un champ de vision, et activée pour détecter et évaluer des objets jusqu'à une distance déterminée.

6. Dispositif concentrateur intelligent selon l'une quelconque des revendications 1 à 4, dans lequel au moins un des détecteurs prévus pour être connectés à un connecteur de détecteurs est une caméra 3D multi-pixels.

7. Dispositif concentrateur intelligent selon l'une quelconque des revendications 1 à 4, dans lequel au moins un des détecteurs prévus pour être connectés à un connecteur de détecteurs est l'un de la liste de détecteurs comprenant des caméras THz UV thermiques hyper/multispectrales.

8. Dispositif concentrateur intelligent selon l'une quelconque des revendications 1 à 4, dans lequel au moins un des détecteurs est une unité de mesure d'inertie, qui permet de déterminer une référence à un nuage de points au cas où le concentrateur intelligent se déplace, ou de donner un signal de vibration au cas où le concentrateur intelligent est statique.

9. Dispositif concentrateur intelligent selon l'une quelconque des revendications 1 à 4, dans lequel au moins un des détecteurs est un récepteur de radiofréquence, configuré pour effectuer une triangulation de radiofréquence, activant ainsi le concentrateur intelligent comme un marqueur qui calcule également son positionnement absolu en dialoguant avec des ancrages de radiofréquence fixes dans des positions connues.

10. Dispositif concentrateur intelligent selon l'une quelconque des revendications 1 à 9, dans lequel les détecteurs prévus pour être connectés à la pluralité de connecteurs de détecteurs sont configurés par rapport au concentrateur de façon à former une topologie en étoile avec le concentrateur au centre de l'étoile, de sorte que chacun des détecteurs possède à travers son connecteur de détecteurs correspondant une connexion directe au concentrateur.
